# FASCICULE DE BREVET EUROPEEN

(11) **EP 2 724 935 B1**
(45) Date de publication et mention de la délivrance du brevet: **19.11.2014**
(21) Numéro de dépôt: 13004896.0
(22) Date de dépôt: 11.10.2013
(51) Int. Cl.: B64C 27/00, B64D 11/00, B64D 43/00

(54) **Giravion équipé d'une structure de montage conjoint d'un tableau de commande et d'une baie avionique équipés d'un ensemble unitaire de câblage**
Drehflügelflugzeug mit einer Montagestruktur aus einer Bedientafel und einer Avionik-Bucht, die mit einer gemeinsamen Verkabelungseinheit versehen ist
Rotorcraft provided with a structure for jointly mounting a control panel and an avionics rack provided with a single cable assembly

(30) Priorité: 25.10.2012 FR 1202839
(43) Date de publication de la demande: 30.04.2014
(73) Titulaire: Airbus Helicopters, 13725 Marignane Cedex (FR)
(72) Inventeur: Olive, Richard, 13500 Martigues (FR)
(74) Mandataire: GPI & Associés

(56) Documents cités:
- EP-A2- 0 283 926
- US-A- 4 780 838
- US-A1- 2007 198 141
- US-A1- 2012 075 120

## Description

La présente invention est du domaine de l'aménagement des équipements d'un aéronef, giravion notamment, pour leur implantation sur une structure de fuselage du giravion. La présente invention relève plus particulièrement des modalités de montage à bord d'un giravion de tels équipements, comprenant des instruments d'interface homme/machine et une baie avionique avant.

Les postes de pilotage des giravions sont équipés d'instruments d'interface entre un pilote humain et divers organes fonctionnels du giravion.

Les instruments d'interface comprennent des instruments de commande manoeuvrables par le pilote, tels que des boutons de commande et/ou des curseurs par exemple. Les instruments d'interface comprennent encore des instruments de contrôle du fonctionnement du giravion, notamment par voie d'affichage, tels que des écrans et/ou des organes d'affichage analogues. De tels instruments d'interface sont exploités par le pilote pour commander le fonctionnement du giravion.

Les organes fonctionnels sont par exemple des calculateurs exploités pour gérer le fonctionnement du giravion, des équipements de servitude du giravion ou encore des instruments de bord tels que des capteurs d'informations et des moyens de mesure et/ou de calcul utiles au fonctionnement du giravion. Les équipements de servitude sont par exemple des équipements de confort, telle qu'une installation de ventilation, de chauffage et/ou de climatisation, tel qu'un système d'éclairage ou tel que tout autre équipement auxiliaire du giravion.

Pour gérer le fonctionnement du giravion, les calculateurs, les instruments d'interface, les équipements de servitude et les divers instruments de bord dont le giravion est muni, sont répartis à bord du giravion en étant placés en communication entre eux par l'intermédiaire d'un réseau de câblage et de bus de communication.

Dans ce contexte, les instruments d'interface sont regroupés en un tableau de bord intégré à une planche de bord du poste de pilotage. Les instruments d'interface sont notamment implantés sur un support de façade, par exemple agencé en pupitre et/ou en console et/ou en tout autre support analogue apte à recevoir les dits instruments d'interface. Le support de façade ou structure analogue porteuse d'un ou de plusieurs instruments d'interface, comporte divers compartiments agencés pour la réception sélective des instruments d'interface.

De tels agencements d'un poste de pilotage pour giravion sont par exemple divulgués par les documents US 4 780 838 (ADELSON R.L.), US 2012/075120 (BARBIERI A.), EP 0 283 926 (MESSERSCHMITT BOELKOW) et US 2007/198141 (MOORE T.G.).

Les calculateurs exploités pour gérer le fonctionnement du giravion sont couramment répartis dans diverses baies avioniques pour leur implantation à bord du giravion. Parmi ces baies avioniques, au moins une baie avionique avant est placée à l'avant du giravion. Les baies avioniques forment des stations d'accueil sélectif d'une ou de plusieurs unités de calcul regroupant divers calculateurs et/ou autres moyens électroniques de commande du fonctionnement du giravion.

Les instruments d'interface et les calculateurs logés dans les baies avioniques, sont équipés de connecteurs permettant leur raccordement électrique avec divers organes du giravion par l'intermédiaire d'un câblage. Les différents calculateurs répartis à bord du giravion sont mis en communication entre eux par l'intermédiaire d'un réseau de communication exploitant un câblage avionique apte à transmettre des signaux de bus de communication, des concentrateurs de données et des composants passerelles équipant les diverses baies avioniques.

Plus particulièrement, le câblage procure une fonction d'alimentation en énergie électrique des instruments d'interface et des calculateurs, depuis un réseau électrique de bord du giravion. Le câblage procure aussi une fonction de transmission de signaux pour mettre en communication des instruments d'interface et des calculateurs entre eux, et/ou avec divers calculateurs répartis sur le giravion. Le câblage permet aussi de mettre en relation divers équipements et/ou organes du giravion dont le fonctionnement est à commander, de tels équipements et/ou organes étant potentiellement émetteurs d'informations utiles aux calculateurs et aux instruments d'interface.

Il est traditionnel d'installer une structure de fuselage du giravion sur une chaîne de montage pour son équipement. Dans le cadre de la présente invention, ladite structure de fuselage est à considérer correspondante à la zone avant du giravion qui est à équiper, notamment au regard de l'installation des instruments d'interface, d'au moins une baie avionique avant et du ou des câblages qui leur sont affectés pour leur alimentation en énergie électrique et pour leur mise en communication avec divers organes distants répartis sur le giravion.

Il est souhaitable que les instruments d'interface, voire encore la baie avionique avant, soient implantés sur la structure de fuselage le plus tard possible, pour limiter les risques de leur endommagement.

C'est pourquoi il est courant dans un premier temps, d'implanter un support de façade sur la structure de fuselage dans le poste de pilotage. Puis, des câblages chacun composés de divers faisceaux affectés aux instruments d'interface et aux calculateurs logés dans la baie avionique avant, sont installés sur la structure de fuselage. Le fonctionnement des câblages est alors contrôlé, et le cas échéant des réparations des câblages sont effectuées.

Dans un deuxième temps, les instruments d'interface sont installés sur le support de façade. La baie avionique avant est installée sur la structure de fuselage en un emplacement dédié, notamment localisé dans le nez du giravion. Les câblages sont raccordés respectivement aux instruments d'interface et aux calculateurs logés dans la baie avionique avant, par l'intermédiaire des connecteurs dont ils sont équipés. Les fonctionnements respectifs des instruments d'interface et des calculateurs logés dans la baie avionique avant sont contrôlés, et le cas échéant des réparations sont effectuées.

Dans ce contexte, il est constaté que de telles modalités d'installation des instruments d'interface et de la baie avionique avant sur la structure de fuselage méritent d'être améliorées.

Il est par exemple constaté que les temps de montage nécessaires à l'équipement de ladite structure de fuselage méritent d'être réduits. Il doit ainsi être recherché de faciliter l'aménagement du poste de pilotage et l'installation de la baie avionique avant. Une telle recherche est néanmoins rendue difficile en raison des différentes séquences d'intervention des opérateurs pour aménager le poste de pilotage et pour installer la baie avionique avant, compte tenu du confinement des zones d'intervention des opérateurs propres à la structure de fuselage avant du giravion.

Il est par exemple encore constaté que l'organisation de la chaîne de montage dédiée à l'équipement de ladite structure de fuselage méritait d'être simplifiée. Il est notamment utile d'organiser au mieux un approvisionnement en composants de la chaîne de montage, permettant de limiter les référencements en bord de chaîne et de simplifier les opérations à effectuer pour l'implantation de ces composants à bord du giravion.

Il est par exemple encore à considérer qu'un aménagement de la zone avant du giravion doit répondre à des requêtes spécifiques selon divers besoins de fonctionnement du giravion. Une telle multiplicité de besoins implique notamment des organisations spécifiques de la baie avionique avant et de ses moyens de mise en communication avec les divers calculateurs, équipements de servitude et/ou instruments de bord répartis sur le giravion. En conséquence, la standardisation de l'aménagement de la structure de fuselage et de l'organisation de la chaîne de montage n'est pas facilitée. Il est souhaitable que l'aménagement de la zone avant répondant aux besoins d'une dite requête spécifique soit pris en compte le plus tard possible sur la chaîne de montage, afin de permettre au mieux une standardisation de l'organisation de la zone avant du giravion.

Il est par exemple aussi constaté que les modalités mises en oeuvre pour équiper ladite structure de fuselage, rendaient difficiles un éventuel aménagement ultérieur de la baie avionique avant. Un tel éventuel aménagement ultérieur relève d'une intégration potentielle des calculateurs logés dans la baie avionique avant dans le cadre d'un réseau de communication évolutif, tel que celui divulgué par le document FR2962617 (EUROCOPTER FRANCE).

Dans le contexte d'une recherche des dites améliorations, il doit être évité de complexifier outre mesure les modalités d'organisation et de câblage propres aux instruments d'interface et à la baie avionique. Il est par ailleurs souhaitable de mettre à profit ladite recherche d'améliorations, pour réduire la masse globale de l'ensemble des moyens exploités dans le cadre d'une telle recherche. Il doit aussi être pris en compte des contraintes liées à une maintenance du giravion qui doit être aisée à opérer et qui puisse être effectuée en limitant les coûts d'intervention.

Le but de la présente invention est de proposer des modalités d'aménagement d'un poste de pilotage et d'implantation d'une baie avionique avant sur une structure de fuselage d'un giravion.

Il est plus particulièrement visé par la présente invention de proposer des solutions permettant de répondre au mieux à un compromis procurant des améliorations au regard des constats et contraintes précédemment révélés.

Un giravion relevant de la présente invention est équipé de moyens de montage à bord d'une structure de fuselage d'au moins une baie avionique avant et d'un poste de pilotage comportant au moins un instrument d'interface homme-machine. La baie avionique avant intègre au moins une unité de calcul comprenant un ou plusieurs calculateurs, et au moins un bus de communication reliant l'unité de calcul à divers organes du giravion.

Les moyens de montage comprennent plus particulièrement :
- ) des moyens d'assemblage mécanique de l'instrument d'interface et de la baie avionique avant sur ladite structure de fuselage, et
- ) au moins un câblage équipant le dit au moins un instrument d'interface et ladite au moins une baie avionique avant pour leur alimentation en énergie électrique et pour leur mise en communication avec des organes distants répartis sur le giravion. De tels organes distants comprennent au moins un calculateur, au moins un équipement de servitude du giravion, et au moins un instrument de bord. Un tel instrument de bord est notamment un instrument du groupe d'instruments comprenant l'un quelconque au moins d'au moins un actionneur, d'au moins un capteur d'informations et/ou d'au moins un moyen de calcul et/ou de mesure par exemple.

Selon la présente invention, les moyens d'assemblage mécanique comprennent une structure de montage conjoint du dit au moins un instrument d'interface et de ladite au moins une baie avionique avant sur la structure de fuselage.

Ladite structure de montage incorpore un corps alvéolé muni de moyens de fixation à la structure de fuselage. Les alvéoles du corps alvéolé ménagent des compartiments logeant en façade du corps alvéolé au moins un instrument d'interface, et en zone arrière du corps alvéolé, au moins une baie avionique avant. Au moins un compartiment ménage au moins un couloir de passage d'un ensemble unitaire de câblage incorporable en bloc sur la structure de montage. Le dit ensemble unitaire de câblage est équipé de prises de coupure montées sur le corps alvéolé, en procurant un raccordement du dit au moins un instrument d'interface et de ladite au moins une unité de calcul aux dits organes distants par l'intermédiaire des dites prises de coupure.

Dans le cadre d'une simplification structurelle de l'ensemble unitaire de câblage, il est proposé de simplifier l'organisation des prises de coupure tout en favorisant une potentielle évolution ultérieure de l'organisation des moyens de communication équipant la structure de montage et plus particulièrement la baie avionique avant. De tels moyens de communication sont des moyens d'échange d'informations entre la structure de montage et des organes distants répartis à bord du giravion, tels que divers moyens de calcul, divers équipements, équipements de servitude notamment, et/ou divers instruments de bord.

Plus particulièrement, les dites prises de coupure comprennent avantageusement des prises avioniques de communication entre ladite au moins une baie avionique avant et les dits organes distants. Les dites prises avioniques sont ségréguées en au moins une connectique principale et au moins une connectique secondaire que comprend un module primaire de communication équipant individuellement la ou les baies avioniques avant. La connectique principale est une connectique d'interface entre l'unité de calcul propre à une dite au moins baie avionique avant et au moins un dit calculateur. La connectique secondaire est une connectique d'interface entre le module primaire de communication et au moins un module secondaire de communication intégrant un concentrateur secondaire de données collectées depuis l'un quelconque au moins d'un dit instrument de bord et/ou d'un dit équipement de servitude.

La ségrégation des dites prises avioniques permet de simplifier la structure de l'ensemble unitaire de câblage tout en procurant des capacités optimisées de communication entre la structure de montage et de dits organes distants potentiellement en nombre important et évolutif.

La connectique secondaire est avantageusement en relation avec l'unité de calcul propre à ladite au moins une baie avionique, par l'intermédiaire d'un composant passerelle du module primaire de communication.

Selon une forme de réalisation, le module primaire comporte :
- ) au moins un bus primaire de communication numérique entre l'unité de calcul et le calculateur. Le bus primaire de communication est potentiellement indifféremment de type unidirectionnel, de type bidirectionnel et/ou de type multiplexé. Un tel bus primaire de communication est par exemple un réseau Ethernet redondant, tel qu'un bus AFDX (d'après l'acronyme anglais Avionics Full DupleX switched ethernet), un bus de données série multiplexé, tel qu'un bus MIL-STD-1553 (d'après l'acronyme anglais MlLitary STandarD), ou un bus unidirectionnel standard, tel qu'un Arinc 429 (d'après l'acronyme anglais Aeronautical Radio INCorporation) ou tout autre bus de communication dérivé de l'Arinc 429.
- ) au moins un bus secondaire de terrain entre l'unité de calcul et le module secondaire. Le bus secondaire de terrain est avantageusement un bus numérique déterministe de type multiplexé, tel que du type CAN (d'après l'acronyme anglais Controller Area Network) ou bus de terrain analogue.

Le concentrateur secondaire de données inclue notamment les fonctions de réception, d'acquisition, de conversion de formats de données numériques/analogiques et analogiques/numériques, et d'aiguillage des informations collectées par le concentrateur secondaire. De telles informations collectées sont notamment celles fournies d'une part par l'unité de calcul, par l'intermédiaire du composant passerelle notamment, et d'autre part par les dits instruments de bord et/ou par un dit équipement de servitude.

De préférence, le composant passerelle est en outre en communication avec un concentrateur primaire de données collectées depuis au moins un instrument d'interface homme-machine, et plus particulièrement depuis un organe de commande manuelle manoeuvrable par un pilote humain du giravion. Un tel organe de commande manuelle est par exemple agencé en bouton de commande et/ou en curseur notamment implantés sur une manette de commande, manette de commande de vol plus spécifiquement.

L'ensemble unitaire de câblage intègre au moins des faisceaux de communication formés indifféremment de faisceaux électriques ou de faisceaux optiques.

L'ensemble unitaire de câblage intègre notamment encore des faisceaux électriques d'alimentation en énergie électrique des divers organes consommateurs d'énergie électrique inclus dans la structure de montage. Les faisceaux de communication sont notamment des faisceaux de mise en relation du ou des instruments d'interface et de la ou des baies avioniques entre eux par l'intermédiaire de prises annexes équipant des faisceaux annexes incorporés à l'ensemble unitaire de câblage, et/ou de mise en relation du ou des instruments d'interface et de la ou des baies avioniques avec de dits organes distants par l'intermédiaire des dites prises de coupure équipant des faisceaux de communication entre la structure de montage et son environnement extérieur.

Selon une forme préférée de réalisation, l'une au moins des alvéoles du corps alvéolé ménage un compartiment logeant au moins un équipement de servitude du giravion. L'ensemble unitaire de câblage incorpore au moins un faisceau affecté au dit équipement de servitude, procurant son alimentation en énergie électrique et sa mise en relation avec au moins un instrument d'interface et/ou avec au moins un calculateur de la baie avionique avant potentiellement par l'intermédiaire d'un dit module secondaire de communication.

Le dit équipement de servitude logé dans un dit compartiment qui lui est affecté est par exemple une installation de ventilation, de chauffage et/ou de climatisation et/ou un module de gestion de l'éclairage du giravion.

Le corps alvéolé ménage avantageusement à son travers un passage d'accès à ladite au moins une baie avionique avant et à l'ensemble unitaire de câblage, depuis le dit au moins un compartiment ménagé en façade du corps alvéolé.

Selon une forme préférée de réalisation, les dites alvéoles du corps alvéolé ménagent au moins :
-) dans une zone avant du corps alvéolé formant élément de façade d'un tableau de bord, au moins un premier compartiment de l'élément de façade logeant au moins un instrument d'interface,
-) dans une zone arrière du corps alvéolé formant local technique, au moins un deuxième compartiment logeant au moins une baie avionique avant,
-) dans une zone médiane du corps alvéolé entre la zone avant et la zone arrière, au moins un couloir de passage de l'ensemble unitaire de câblage sinon aussi au moins un couloir d'accès depuis l'élément de façade à l'ensemble unitaire de câblage et au local technique,
-) au moins un logement recevant les dites prises de coupure.

Selon une forme avantageuse de réalisation, le corps alvéolé est muni de moyens de montage d'au moins un support que comprend la structure de montage. Ledit support est un support amovible et interchangeable entre une pluralité de supports en nombre et agencements sélectifs. Ledit support incorpore notamment au moins un compartiment logeant au moins un instrument d'interface.

L'ensemble unitaire de câblage incorpore subsidiairement au moins un faisceau de raccordement d'au moins un instrument de bord avec la baie avionique avant, notamment par l'intermédiaire d'au moins une dite prise avionique.

Un tel raccordement de l'instrument d'interface est potentiellement réalisé par l'intermédiaire d'un dit module secondaire de communication, ou par l'intermédiaire du concentrateur primaire de données intégré au dit module primaire de communication, un tel concentrateur de données étant potentiellement en relation avec une pluralité d'instruments d'interface et/ou d'instruments de bord.

L'ensemble unitaire de câblage incorpore avantageusement des faisceaux annexes munis de prises annexes, les dits faisceaux procurant un raccordement aux prises de coupures respectivement d'un dit au moins un instrument d'interface et d'une dite au moins une baie avionique avant.

Il est à considérer que traditionnellement au moins un câblage principal chemine depuis une zone de quart de coque du fuselage du giravion en étant prolongé vers une zone de pointe avant du dit fuselage, pour distribuer divers faisceaux de ce câblage principal vers au moins une baie avionique avant, un pupitre de commande et une planche de bord. Selon les dispositions de la présente invention, de tels câblages principaux respectivement droit et gauche, notamment en provenance de ladite zone de quart de coque, sont avantageusement mis en relation avec la structure de montage dans le poste de pilotage en zone avant de la structure de montage. De telles dispositions permettent d'éviter un cheminement de tels câblages principaux vers l'avant de l'appareil, notamment en pointe avant du fuselage vers l'arrière de la structure de montage.

La présente invention a aussi pour objet un procédé de mise en oeuvre d'une structure de montage que comprend un giravion conforme à la présente invention. Le procédé de la présente invention comprend les opérations suivantes :
- ) fabriquer en atelier le corps alvéolé,
- ) fabriquer en atelier l'ensemble unitaire de câblage équipé au moins des prises de coupure sinon aussi des prises annexes, puis tester le fonctionnement de l'ensemble unitaire de câblage et si besoin effectuer des réparations,
- ) monter en atelier sur le corps alvéolé l'ensemble unitaire de câblage et les prises de coupure sur le corps alvéolé,
- ) monter en atelier le dit au moins un instrument d'interface et ladite au moins une baie avionique logeant l'unité de calcul, voire encore le cas échéant un dit équipement de servitude,
- ) tester en atelier le fonctionnement de la structure de montage obtenue, et si besoin effectuer des réparations,
- ) implanter la structure de montage obtenue et testée sur la structure de fuselage présentée sur une chaîne de montage du giravion.

Des exemples de réalisation de la présente invention vont être décrits en relation avec les figures des planches annexées, dans lesquelles :
- la fig.1 est une illustration d'une structure de montage équipant un giravion selon un exemple de réalisation de la présente invention. La fig.1 est composée de plusieurs schémas successifs a, b, c, d, e et f représentant respectivement différentes étapes d'assemblage de la structure de montage sur une structure de fuselage avant du giravion.
- la fig.2 est un schéma illustrant un exemple d'organisation de moyens de communication entre une structure de montage conforme à la présente invention et des organes distants répartis sur le giravion.
- la fig.3 est une illustration de la structure de montage représentée sur la fig.1 installée sur la structure de fuselage avant du giravion.

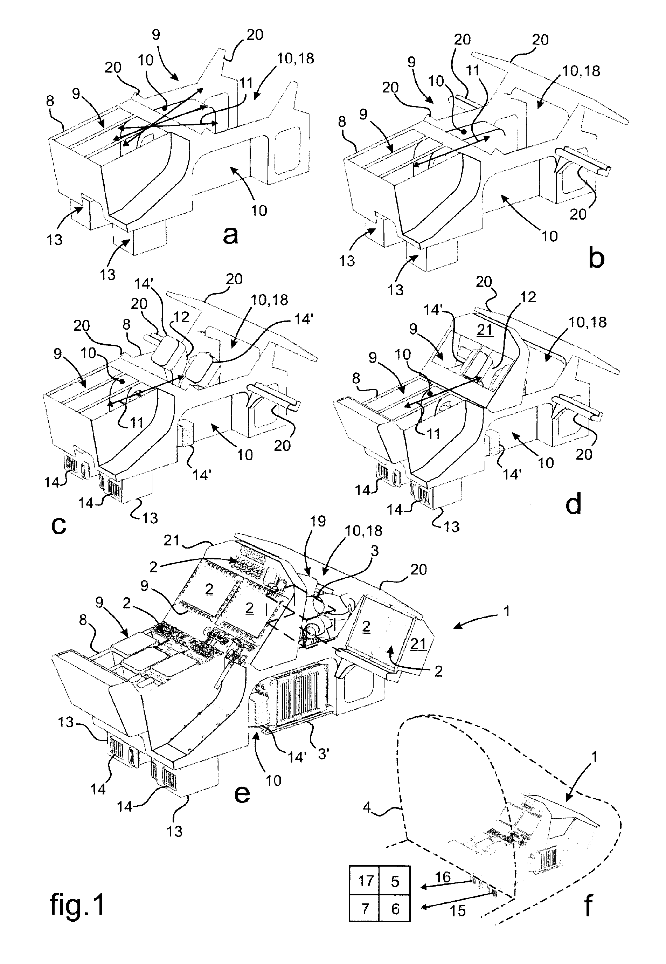

Sur la fig.1, une structure de montage 1 est organisée pour l'implantation conjointe d'instruments d'interface 2 et d'une ou de plusieurs baies avioniques avant 3,3' sur une structure de fuselage 4 d'un giravion.

Les instruments d'interface 2 sont destinés à équiper un poste de pilotage du giravion, en étant regroupés en tableau de bord. Les instruments d'interface 2 comprennent notamment des organes d'affichage, tels que des écrans, et des organes de commande, tels que des boutons ou des curseurs, manoeuvrables par un pilote humain du giravion.

La ou les baies avioniques avant 3, 3' sont individuellement globalement formées d'un coffre logeant au moins une unité de calcul en communication avec des calculateurs 5 distants, avec des équipements de servitude 6 du giravion, et/ou avec divers instruments de bord 7 de capture, de mesure et/ou de calcul d'informations utiles à la commande de la progression en vol du giravion. Les calculateurs 5 sont implantés localement sur le giravion à distance des baies avioniques avant 3, 3', en étant par exemple incorporés dans une baie avionique arrière. Les équipements de servitude 6 sont par exemple des équipements de confort et/ou tout autre équipement ne procurant pas une fonction essentielle au pilotage du giravion.

La structure de montage 1 comprend un corps alvéolé 8 muni de moyens de fixation à la structure de fuselage 4 du giravion. De tels moyens de fixation sont des moyens courants mettant par exemple en oeuvre un scellement et/ou des organes d'attache, tels que par exemple des vis, des boulons, des rivets ou autres organes d'attache analogues.

Sur les schémas a, b, c et d plus particulièrement, les alvéoles du corps alvéolé 8 ménagent des compartiments 9 aptes à loger les instruments d'interface 2 dans une zone avant du corps alvéolé 8 formant élément de façade. Un tel élément de façade est notamment agencé en console rehaussé d'un tableau d'affichage. Des compartiments 10 formés par le corps alvéolé 8 sont encore aptes à loger individuellement ou conjointement au moins une baie avionique avant 3 dans une zone arrière du corps alvéolé 8 formant local technique.

Sur l'exemple de réalisation illustré, les baies avioniques avant 3,3' comprennent deux baies avioniques avant 3' latérales disposées en soubassement respectivement de part et d'autre du corps alvéolé 8, et accessoirement une baie avionique avant 3 disposée en fond arrière du corps alvéolée 8.

En outre, au moins une alvéole du corps alvéolé ménage en sa zone médiane au moins un couloir 11 de passage d'un câblage que comprend la structure de montage 1. Un tel câblage est avantageusement formé d'un ensemble unitaire de câblage 12 rassemblant en bloc l'ensemble des faisceaux électriques et/ou optiques nécessaires au fonctionnement de la structure de montage 1.

Les notions « avant », « arrière » et « médiane » sont à considérer au regard de l'orientation de la structure de montage 1 en position d'installation sur la structure de fuselage 4. En situation d'installation sur la structure de fuselage 4, la zone avant de la structure de montage 1 est une zone orientée frontalement vers une station d'accueil du pilote du giravion dans le poste de pilotage.

La zone arrière de la structure de montage 1 est considérée comme un emplacement selon lequel la zone avant est interposée entre ladite station d'accueil et la zone arrière. Une telle zone arrière est potentiellement localisée en en fond arrière du corps alvéolé 8, en zone latérale du corps alvéolé 8, ou encore en soubassement du corps alvéolé 8.

La zone médiane de la structure de montage 1 est une zone d'interposition entre la zone avant et la zone arrière, permettant à l'ensemble unitaire de câblage 12 de s'étendre entre les instruments d'interface 2 et la ou les baies avioniques avant 3,3' en émergeant potentiellement hors du corps alvéolée 8 par l'intermédiaire des compartiments 13 réservés à la réception de prises de coupure 14 incorporées à l'ensemble unitaire de câblage 8.

Plus spécifiquement sur l'exemple de réalisation illustré, le corps alvéolé 8 comporte en zone avant au moins un premier compartiment 9 de réception d'au moins un instrument d'interface 2, et en zone arrière au moins un deuxième compartiment 10 de réception d'au moins une baie avionique avant 3,3'.

Sur l'exemple de réalisation illustré, au moins un premier compartiment 9 est disposé frontalement au corps alvéolé 8, dans une zone du corps alvéolé 8 agencée en console prolongée par un élément frontal. Au moins un dit premier compartiment 9 est potentiellement ménagé latéralement au corps alvéolé 8, tel que sur l'exemple de réalisation en fond du corps alvéolé 8. Une pluralité de deuxièmes compartiments 10 reçoivent chacun individuellement des baies avioniques avant 3,3', dont deux dites baies avioniques avant 3' disposées latéralement en soubassement de part et d'autre du corps alvéolé 8, et dont une dite baie avionique avant 3 disposée en fond arrière du corps alvéolé 8.

Un ou plusieurs couloirs 11 de passage de l'ensemble unitaire de câblage 12 sont ménagés entre le ou les premiers compartiments 9 et le ou les deuxièmes compartiments 10. Plus particulièrement sur l'exemple de réalisation illustré, Un couloir de passage médian est ménagé entre le premier compartiment 9 disposé frontalement au corps alvéolé 8, et un deuxième compartiment 10 disposé en fond arrière du corps alvéolé 8. L'ensemble unitaire de câblage 12 occupe un volume interne médian du corps alvéolé 8, en s'étendant depuis la façade vers le fond et le soubassement du corps alvéolé. Le ou les couloirs 11 de passage de l'ensemble unitaire de câblage 12 forment en outre avantageusement un couloir d'accès, depuis le premier compartiment 9 disposé frontalement au corps alvéolé 8, vers l'ensemble unitaire de câblage 12 et vers les compartiments 10 formant local technique de réception de la ou des baies avioniques avant 3, voire encore vers un compartiment annexe 18 formant local technique de réception d'un équipement de servitude 19.

Le corps alvéolé 8 comporte aussi des logements 13 pour la réception de prises de coupure 14 de faisceaux composant l'ensemble unitaire de câblage 12. De telles prises de coupure 14 procurent un raccordement entre les divers faisceaux intégrés à l'ensemble unitaire de câblage 12 et des câblages extérieurs 15, 16 à la structure de montage 1. Les prises de coupures 14 sont reçues dans des logements 13 qui sont latéralement répartis en soubassement du corps alvéolé 8 pour sécuriser vis-à-vis de l'incendie le raccordement de la structure de montage 1 avec son environnement extérieur.*

Les dits câblages extérieurs 15,16 sont affectés aux organes distants 5,6,7 et à au moins une source 17 d'énergie électrique du giravion, auxquels la structure de montage 1 doit être reliée. Les prises de coupure 14 permettent aisément de mettre en relation et inversement de rompre des mises en relation de la structure de montage 1 avec les dits organes distants 5,6,7 et avec la source 17 d'énergie électrique.

L'ensemble unitaire de câblage 12 est composé de divers faisceaux pour le raccordement de la structure de montage 1 avec l'extérieur, voire encore pour un raccordement des instruments d'interface 2 entre eux et/ou pour un raccordement des instruments d'interface 2 avec la ou les baies avionique avant 3, 3'. De tels raccordements peuvent être aisément et rapidement effectués par un opérateur au moyen des prises de coupure 14 équipant l'ensemble unitaire de câblage 12 pour le raccordement de la structure de montage 1 avec l'extérieur, et au moyen de prises annexes 14' de raccordement individuel aux prise de coupure 14 de faisceaux affectés à un ou à un groupe d'instruments d'interface 2, à une ou à un groupe de baies avioniques avant 3, et/ou à un ou à un groupe d'équipements de servitudes 19 logés dans le corps alvéolé 8.

Le raccordement au moyen de l'ensemble unitaire de câblage 12 de la structure de montage 1 avec l'extérieur, procure une alimentation en énergie électrique des instruments d'interface 2 et de la ou des baies avioniques avant 3,3' avec la source d'alimentation en énergie électrique 17, telle qu'un réseau de bord électrique du giravion. Le dit raccordement permet encore la mise en communication des instruments d'interface 2 et/ou de la ou des baies avioniques avant 3,3' avec divers dits calculateurs 5, équipements de servitudes 6 et/ou instruments de bord 7 répartis à bord du giravion. Une telle mise en communication est potentiellement réalisée par des faisceaux électriques et/ou par des faisceaux optiques incorporés en bloc dans l'ensemble unitaire de câblage 12.

Sur le schéma e plus particulièrement, un compartiment 18 du corps alvéolé 8 loge avantageusement un équipement de servitude 19 du giravion, telle qu'une installation de ventilation, de chauffage et/ou de climatisation. Un tel compartiment 18 est par exemple ménagé en zone médiane, en soubassement ou en fond du corps alvéolé 8 tel que sur l'exemple de réalisation illustré.

Sur l'exemple de réalisation illustré sur la fig.1, le corps alvéolé 8 est muni de moyens de montage 20 d'un support 21 de réception d'un ou de plusieurs instruments d'interface 2. De tels moyens de montage 20 sont potentiellement intégrés au corps alvéolé 8, en étant par exemple formé de rails de réception ou d'organes de fixation du support 21. De tels moyens de montage 20 sont potentiellement encore rapportés et fixés sur le corps alvéolé 8, voire encore sont potentiellement formés d'une alvéole spécifique du corps alvéolé 8 dédiée à la réception du support 21. Une telle alvéole spécifique est potentiellement formée d'un dit premier compartiment 9 apte à recevoir en lui-même un instrument d'interface 2. D'une manière générale, une alvéole du corps alvéolé 8 peut recevoir selon les besoins un dit support 21 amovible choisi parmi un jeu de dits supports 21 interchangeables et d'agencements respectifs.

L'ensemble unitaire de câblage 12 peut être aisément installé en bloc sur le corps alvéolé 8 par un opérateur. L'installation de l'ensemble unitaire de câblage 12 sur le corps alvéolé 8 et une vérification du fonctionnement de l'ensemble unitaire de câblage 12 installé, sont effectuées préalablement à l'installation des instruments d'interface 2 et de la ou des baies avioniques avant 3. L'ensemble unitaire de câblage 12 peut aussi être vérifié postérieurement à son installation sur le corps alvéolé 8.

Les instruments d'interface 2 et les baies avioniques avant 3, 3' étant installés, leurs fonctionnements respectifs sont contrôlés préalablement à l'implantation de la structure de montage 1 sur la structure de fuselage 4.

Plus particulièrement, le corps alvéolé 8 fabriqué en atelier (schéma a) est installé sur un poste d'assemblage. Eventuellement, le corps alvéolé 8 intègre de moulage de dits moyens de montage 20. Cependant, de tels moyens de montage 20 peuvent être aussi rapportés sur le corps alvéolé 8, en vue de la réception ultérieure d'instruments d'interface 2 (schéma b).

Puis, l'ensemble unitaire de câblage 12 est monté en un bloc unitaire sur le corps alvéolé 8 et son fonctionnement est vérifié (schéma c). Si besoin dans une étape suivante, un support 21 peut être installé sur le corps alvéolé 8 (schéma d) par l'intermédiaire des moyens de montage 20, pour recevoir ultérieurement des instruments d'interface 2. Les instruments d'interface 2 et le cas échant l'équipement de servitude 19, sont alors installés en tout ou partie sur le corps alvéolé (schéma e), et leur fonctionnement est vérifié.

Dans une étape suivante, la ou les baies avioniques avant 3,3' sont installées sur le corps alvéolé 8 (schéma e) et leur fonctionnement est vérifié.

Le cas échéant, un reliquat d'instruments d'interface 2 est potentiellement installé postérieurement à l'installation de la ou des baies avioniques avant 3,3'. Les fonctionnements des instruments d'interface 2 et le cas échéant de l'équipement de servitude 19, sont potentiellement vérifiés préalablement ou postérieurement à l'installation de la ou des baies avioniques avant 3,3' sur le corps alvéolé 8, sinon sont vérifiés simultanément à la vérification du fonctionnement de la ou des baies avioniques avant 3 préalablement installées.

La structure de montage 1, comprenant le corps alvéolé 8 équipé de l'ensemble unitaire de câblage 12, des instruments d'interface 2 et de la ou des baies avioniques avant 3, 3', voire encore de l'équipement de servitude 19, est alors amenée en bordure d'une chaîne de montage du giravion. Une telle structure de montage 1 est aisément manipulable par des opérateurs malgré l'environnement confiné de la structure de fuselage 4.

La structure de fuselage 4 est préalablement installée sur cette chaîne de montage, pour la réception de la structure de montage 1 en une seule opération de montage (schéma f). Une telle opération de montage de la structure de montage 1 sur la structure de fuselage 4 est aisément effectuée par immobilisation en bloc de la structure de montage 1 sur la structure de fuselage, et par raccordement par l'intermédiaire des prises de coupure 14 de l'ensemble unitaire de câblage 12 aux câblages extérieurs 15, 16 respectivement affectés aux organes distants 5,6,7 et à la source 17 d'énergie électrique.

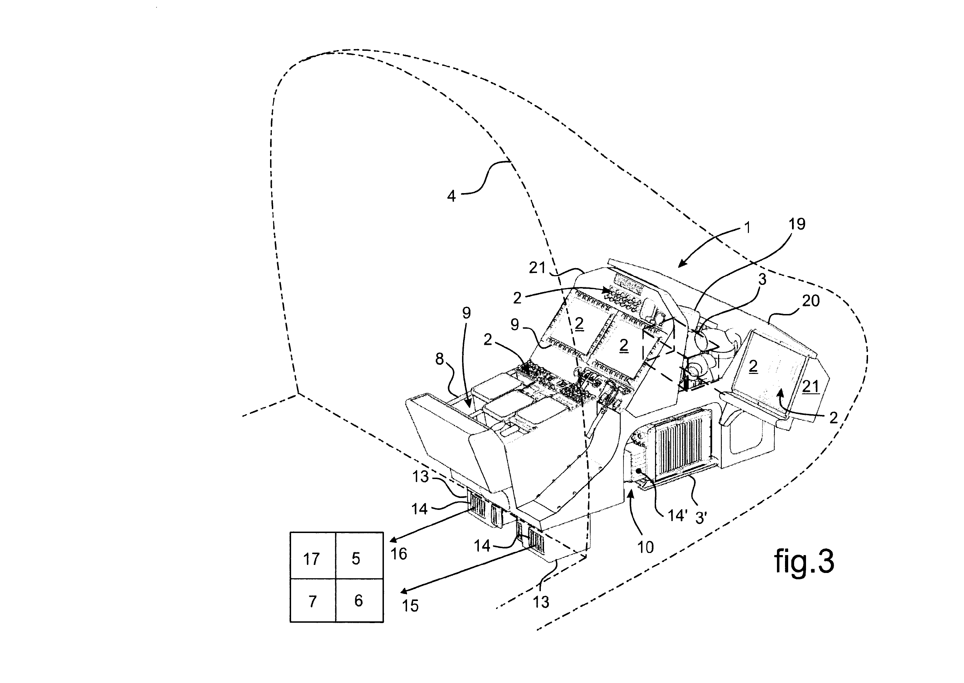

Sur la fig.3, une structure de montage 1 est assemblée conformément aux dispositions illustrées sur la fig.1, et est installée après assemblage sur la structure de fuselage 4. L'installation de la structure de montage 1 sur la structure de fuselage 4 est effectuée rapidement et aisément par un opérateur. Plus particulièrement, la structure de montage 1 est fixée à la structure de fuselage 4, notamment sur une structure de plancher, par tout moyen de fixation appropriés tels que par emboîtement, par scellement et/ou par des organes de fixations rapportés, rivets, vis ou boulons par exemple.

Un ou plusieurs câblages extérieurs 15, 16 sont mis en relation avec la structure de montage 1 par l'intermédiaire des prises de coupure 14, qui sont accessibles en soubassement et en zone avant de la structure de montage 1. De tels câblages extérieurs 15, 16 sont avantageusement latéralement répartis en un câblage extérieur droit 15 et en un câblage extérieur gauche 16. La raccordement de la structure de montage 1 par l'intermédiaire des prises de coupure 14 disposées à l'avant de la structure de montage 1, évite un cheminement des câblages extérieurs 15,16 depuis une zone arrière ou une zone médiane du giravion vers une zone de nez du giravion localisée à l'arrière de la structure de montage 1.

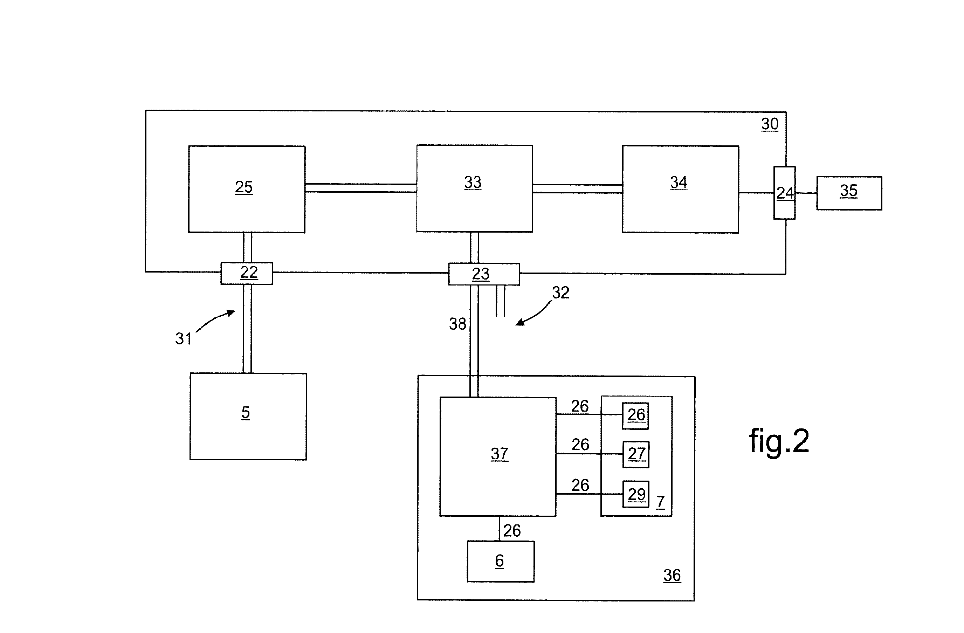

Sur la fig.2, un ensemble unitaire de câblage intégré à la structure de montage représentée sur la fig.1, comprend des prises avioniques 22, 23, 24 à transmission de signaux de communication entre la ou les baies avioniques avant 3,3' et les divers organes distants 5,6,7 extérieurs à la structure de montage. Ces organes distants sont notamment au moins un dit calculateur 5, un dit équipement de servitude 6 et un dit instrument de bord 7.

La connectique des prises avioniques 22, 23, 24 est ségréguée en dissociant au moins la mise en relation d'une unité de calcul 25 de la ou des baies avioniques avant 3,3' respectivement avec au moins un dit calculateur 5 et avec au moins un dit équipement de servitude 6 et/ou au moins un dit instrument de bord 7. La connectique des prises avioniques est ségréguée en une connectique principale 22 d'interface entre la ou les baies avioniques avant 3,3' et le dit calculateur 5, et en une connectique secondaire 23 d'interface entre la ou les baies avioniques avant 3,3' et les dits équipement de servitude 6 et/ou instrument de bord 7.

A titre d'exemples non limitatifs, le ou les calculateurs 5 sont notamment intégrés dans l'une quelconque au moins des unités de commande suivantes équipant couramment les giravions :
- ) une unité de régulation du fonctionnement d'un groupe de motorisation équipant le giravion, telle qu'une unité de régulation du type FADEC (d'après l'acronyme anglais Full Authority Digital Engine Control).
- ) une unité de surveillance du fonctionnement du giravion, telle qu'une unité de surveillance de type HUMS (d'après l'acronyme anglais Health and Usage Monitoring System).
- ) d'une manière générale une ou plusieurs baies avioniques réparties à bord du giravion, baie avionique arrière notamment. De telles baies avioniques logent divers moyens de calcul qui sont essentiels au contrôle du pilotage du giravion.
- ) des modules de commande de vol électriques, telle qu'un module de commande de type FCC (d'après l'acronyme anglais Flight Control Computer),
- ) un système antivibratoire tel que du type AVAS (d'après l'acronyme anglais AntiVibration Active System).

Le ou les équipements de servitude 6 en relation avec la structure de montage, sont au moins un accessoire du giravion dont le fonctionnement est régulé à partir d'au moins un instrument d'interface et/ou à partir d'au moins une dite unité de calcul 25 logée dans une baie avionique avant 3,3'.

Un dit instrument de bord 7 est notamment un organe fournissant des informations 26 utiles pour la mise en oeuvre de l'unité de calcul 25. A titre d'exemples non limitatifs, un tel instrument de bord 7 est par exemple un capteur d'informations 27, un actionneur 28 et/ou un instrument de mesure et/ou de calcul 29. De tels instruments de bord 7 équipent couramment les giravions, pour permettre à un pilote de commander le fonctionnement du giravion, indifféremment pilote humain et/ou pilote automatique.

La structure de montage, et plus particulièrement la ou les baies avioniques avant 3,3', incorpore un module primaire 30 de communication entre l'unité de calcul 25 et les dits organes distants 5,6,7 extérieurs à la structure de montage. Un tel module primaire 30 met en oeuvre divers bus de communication 31,32 selon l'organe distant 5,6,7 mis en relation avec l'unité de calcul 25.

Le module primaire 30 est en communication avec au moins un calculateur 5 extérieur à la structure de montage par l'intermédiaire d'une prise avionique comportant une connectique principale 22. La communication entre l'unité de calcul 25 et un dit calculateur 5 est réalisée par un bus primaire 31 de communication selon les besoins relatifs à la fonction des informations échangées entre l'unité de calcul 25 et le ou les calculateurs 5 distants.

Dans ce contexte, le bus primaire 31 de communication entre l'unité de calcul 25 et le ou les calculateurs 5 distants est indifféremment l'un quelconque au moins des bus de communication de type unidirectionnel, de type bidirectionnel et/ou de type multiplexé. Les protocoles d'arbitrage exploités par de tels bus de communication sont préférentiellement déterministes, en exploitant une relation potentiellement de type maître-esclave ou de type en anneau à jeton.

Le module primaire 30 est en communication avec au moins un équipement de servitude 6 et/ou au moins un instrument de bord 7 par l'intermédiaire d'au moins une prise avionique comportant une connectique secondaire 23 reliant l'unité de calcul 25 à au moins un module secondaire 36 de communication. Une telle communication entre le module primaire 30 avec au moins un équipement de servitude 6 et/ou au moins un instrument de bord 7 exploite un bus secondaire 32 de communication.

La connectique principale 22 et la connectique secondaire 23 sont potentiellement intégrées dans une même prise avionique, ou sont potentiellement intégrées dans des prises avioniques respectives.

Plus particulièrement, le module primaire 30 comprend un composant passerelle 33 interposé entre l'unité de calcul 25 et la prise avionique secondaire 23. Subsidiairement, ce composant passerelle 33 est aussi en relation avec un concentrateur primaire 34 de données en relation avec au moins un instrument d'interface homme-machine 35 agencé en organe de commande manuelle. Un tel organe de commande manuelle est par exemple un bouton de commande implanté sur une manette de commande de vol manoeuvrable par un pilote humain du giravion.

Le composant passerelle 33 est en communication avec un concentrateur secondaire 37 de données que comporte le module secondaire 36 de communication. Ce concentrateur secondaire 37 collecte les informations 26 générées par l'équipement de servitude 6 et/ou par les instruments de bord 7, et collecte les informations 38 en provenance de l'unité de calcul 25 par l'intermédiaire du composant passerelle 33. Dans ce contexte, le concentrateur secondaire 37 intègre notamment les fonctions de réception et d'acquisition des informations collectées 26,38, et les fonctions de conversion de ces informations collectées 26,38 entre des formats de données numériques/analogiques et analogiques/numériques. Le concentrateur secondaire 37 intègre aussi une fonction d'aiguillage des diverses informations collectées 26,38.

## Revendications

1. Giravion équipé de moyens de montage à bord d'une structure de fuselage (4), d'une part d'au moins une baie avionique avant (3, 3') intégrant au moins une unité de calcul (25) et au moins un bus de communication (31,32), et d'autre part d'un poste de pilotage comportant au moins un instrument d'interface (2) homme-machine, les dits moyens de montage comprenant :
- ) des moyens d'assemblage mécanique de l'instrument d'interface (2) et de la baie avionique avant (3,3') sur ladite structure de fuselage (4), et
- ) au moins un câblage équipant le dit au moins un instrument d'interface (2) et ladite au moins une baie avionique avant (3, 3') pour leur alimentation en énergie électrique et pour leur mise en communication avec des organes distants (5,6,7) répartis sur le giravion, les dits organes distants (5,6,7) comprenant au moins un calculateur (5), au moins un équipement de servitude (6) du giravion, et au moins un instrument de bord (7) du groupe d'instruments (7) comprenant l'un quelconque au moins d'au moins un actionneur (28), d'au moins un capteur d'informations (27), et/ou d'au moins un moyen de calcul et/ou de mesure (29),
**caractérisé en ce que** les moyens d'assemblage mécanique comprennent une structure de montage (1) conjoint du dit au moins un instrument d'interface (2) et de ladite au moins une baie avionique avant (3,3') sur la structure de fuselage (4), ladite structure de montage (1) incorporant un corps alvéolé (8) muni de moyens de fixation à la structure de fuselage (4), les alvéoles du corps alvéolé (8) ménageant des compartiments (9,10,18) logeant en façade du corps alvéolé (8) au moins un instrument d'interface (2) et en zone arrière du corps alvéolé (8) au moins une baie avionique avant (3,3'), au moins un compartiment ménageant au moins un couloir (11) de passage d'un ensemble unitaire de câblage (12) incorporable en bloc sur la structure de montage (1) et équipé de prises de coupure (14) montées sur le corps alvéolé (8), l'ensemble unitaire de câblage (12) procurant un raccordement du dit au moins un instrument d'interface (2) et de ladite au moins une unité de calcul (25) aux dits organes distants (5,6,7) par l'intermédiaire des prises de coupure (14).

2. Giravion selon la revendication 1,
**caractérisé en ce que** les dites prises de coupure (14) comprennent des prises avioniques (22,23,24) de communication entre ladite au moins une baie avionique avant (3,3') et les dits organes distants (5,6,7), les dites prises avioniques (22,23,24) étant ségréguées en au moins une connectique principale (22) et au moins une connectique secondaire (23) que comprend un module primaire de communication (30) équipant la baie avionique avant (3,3'), la connectique principale (22) étant une connectique d'interface entre l'unité de calcul (25) et au moins un dit calculateur (5), la connectique secondaire (23) étant une connectique d'interface entre le module primaire (30) de communication et au moins un module secondaire (36) de communication intégrant un concentrateur secondaire (37) de données (26,38) collectées depuis l'un quelconque au moins d'un dit instrument de bord (7) et/ou d'un dit équipement de servitude (6).

3. Giravion selon la revendication 2,
**caractérisé en ce que** la connectique secondaire (23) est en relation avec l'unité de calcul (25) par l'intermédiaire d'un composant passerelle (33) du module primaire (30) de communication.

4. Giravion selon l'une quelconque des revendications 2 et 3,
**caractérisé en ce que** le module primaire (30) comporte au moins un bus primaire (31) de communication numérique indifféremment de type unidirectionnel, de type bidirectionnel ou de type multiplexé entre l'unité de calcul (25) et le calculateur (5), et au moins un bus secondaire (32) de terrain de type multiplexé entre l'unité de calcul (25) et le module secondaire (36).

5. Giravion selon l'une quelconque des revendications 2 à 4,
**caractérisé en ce que** le dit concentrateur secondaire (37) de données (26,38) inclue les fonctions de réception, d'acquisition, de conversion de formats de données numériques/analogiques et analogiques/numériques, et d'aiguillage des informations collectées (26,38) par le concentrateur secondaire (37).

6. Giravion selon l'une quelconque des revendications 3 à 5,
**caractérisé en ce que** le composant passerelle (33) est en outre en communication avec un concentrateur primaire (34) de données collectées depuis au moins un instrument d'interface homme-machine (35).

7. Giravion selon l'une quelconque des revendications 1 à 6,
**caractérisé en ce que** l'ensemble unitaire de câblage (12) intègre au moins des faisceaux de communication formés indifféremment de faisceaux électriques ou de faisceaux optiques.

8. Giravion selon l'une quelconque des revendications 1 à 7,
**caractérisé en ce que** l'une au moins des alvéoles du corps alvéolé (8) ménage un compartiment (18) logeant au moins un équipement de servitude (19) du giravion, l'ensemble unitaire de câblage (12) incorporant au moins un faisceau affecté au dit équipement de servitude (19).

9. Giravion selon la revendication 7,
**caractérisé en ce que** le dit équipement de servitude (19) logé dans un dit compartiment (18) est une installation de ventilation, de chauffage et/ou de climatisation.

10. Giravion selon l'une quelconque des revendications 1 à 9,
**caractérisé en ce que** le corps alvéolé (8) ménage à son travers un passage d'accès à ladite au moins une baie avionique avant (3,3') et à l'ensemble unitaire de câblage (12), depuis le dit au moins un compartiment (9) ménagé en façade du corps alvéolé (8).

11. Giravion selon l'une quelconque des revendications 1 à 10,
**caractérisé en ce que** les dites alvéoles du corps alvéolé(8) ménagent au moins :
- ) dans une zone avant du corps alvéolé (8) formant élément de façade d'un tableau de bord, au moins un premier compartiment (9) de l'élément de façade logeant au moins un instrument d'interface (2),
- ) dans une zone arrière du corps alvéolé (8) formant local technique, au moins un deuxième compartiment (10) logeant au moins une baie avionique avant (3,3'),
- ) dans une zone médiane du corps alvéolé (8) entre la zone avant et la zone arrière, au moins un couloir (11) de passage de l'ensemble unitaire de câblage (12) sinon aussi au moins un couloir d'accès depuis l'élément de façade à l'ensemble unitaire de câblage (12) et au local technique,
- ) au moins un logement (13) recevant les dites prises de coupure (14).

12. Giravion selon l'une quelconque des revendications 1 à 11, **caractérisé en ce que** le corps alvéolé (8) est muni de moyens de montage (20) d'au moins un support (21) que comprend la structure de montage (1), ledit support (21) étant amovible et interchangeable entre une pluralité de supports (21) en nombre et agencements sélectifs, ledit support (21) incorporant au moins un compartiment logeant au moins un instrument d'interface (2).

13. Giravion selon l'une quelconque des revendications 1 à 12,
**caractérisé en ce que** l'ensemble unitaire de câblage (12) incorpore au moins un faisceau de raccordement d'au moins un instrument de bord (7) avec ladite au moins une baie avionique avant (3,3').

14. Giravion selon l'une quelconque des revendications 1 à 13,
**caractérisé en ce que** l'ensemble unitaire de câblage (12) incorpore des faisceaux annexes munis de prises annexes (14') de raccordement aux prises de coupures (14), respectivement d'un dit au moins un instrument d'interface (2) et d'une dite au moins une baie avionique avant (3,3').

15. Procédé de mise en oeuvre d'une structure de montage que comprend un giravion selon l'une quelconque des revendications 1 à 14,
**caractérisé en ce que** le procédé comprend les opérations suivantes :
- ) fabriquer en atelier le corps alvéolé (8),
- ) fabriquer en atelier l'ensemble unitaire de câblage (12) équipé au moins des prises de coupure (14) sinon aussi des prises annexes (14'), puis tester le fonctionnement de l'ensemble unitaire de câblage (12) et si besoin effectuer des réparations,
- ) monter en atelier l'ensemble unitaire de câblage (12) et les prises de coupure (14) sur le corps alvéolé (8),
- ) monter en atelier sur le corps alvéolé (8) le dit au moins un instrument d'interface (2) et ladite au moins une baie avionique avant (3,3') logeant l'unité de calcul (25),
- ) tester en atelier le fonctionnement de la structure de montage (1) obtenue, et si besoin effectuer des réparations,
- ) implanter la structure de montage (1) obtenue et testée sur la structure de fuselage (4) présentée sur une chaîne de montage du giravion.

## Patentansprüche

1. Drehflügelflugzeug mit Mitteln zur Montage an Bord einer Rumpfstruktur (4), einerseits mindestens eines vorderen Avionikmoduls (3, 3'), das mindestens eine Recheneinheit (25) und mindestens einen Kommunikationsbus (31, 32) aufweist, und andererseits eines Cockpits mit mindestens einem Mensch-Maschine-Schnittstelleninstrument (2), wobei die Montagemittel aufweisen:
- ) Mittel zur mechanischen Montage des Schnittstelleninstruments (2) und des vorderen Avionikmoduls (3, 3') auf der Rumpfstruktur (4), und
- ) mindestens eine Verkabelung, mit der das mindestens eine Schnittstelleninstrument (2) und das mindestens eine vordere Avionikmodul (3, 3') für deren Versorgung mit elektrischer Energie und für deren Verbindung mit entfernt angeordneten Organen (5, 6, 7), die über das Drehflügelflugzeug verteilt sind, ausgerüstet sind, wobei die entfernt angeordneten Organe (5, 6, 7) mindestens einen Rechner (5), mindestens eine Hilfsausrüstung (6) des Drehflügelflugzeugs und mindestens ein Bordinstrument (7) aus der Gruppe von Instrumenten (7), die mindestens ein Betätigungselement (28), einen Messwertaufnehmer (27) und/oder mindestens einen Rechner und/oder einen Messfühler (29) umfasst, aufweisen,
**dadurch gekennzeichnet, dass** die Mittel zur mechanischen Montage ein Montagegestell (1) zusammen mit dem mindestens einen Schnittstelleninstrument (2) und mit mindestens einem vorderen Avionikmodul (3, 3') auf der Rumpfstruktur (4) aufweisen, wobei das Montagegestell (1) einen Wabenkörper (8) aufweist, der mit Befestigungsmitteln an der Rumpfstruktur (4) versehen ist, wobei die Waben des Wabenkörpers (8) Fächer (9, 10, 18) bilden, die auf der Stirnseite des Wabenkörpers (8) mindestens ein Schnittstelleninstrument (2) und im hinteren Bereich des Wabenkörpers (8) mindestens ein vorderes Avionikmodul (3, 3') aufnehmen, wobei mindestens ein Fach mindestens einen Durchgang (11) für eine einheitliche Verkabelungseinheit (12) bildet, die als Ganzes in das Montagegestell (1) einbaubar ist und die mit trennbaren Verbindungssteckern (14) ausgerüstet ist, die auf dem Wabenkörper (8) montiert sind, wobei die einheitliche Verkabelungseinheit (12) eine Verbindung des mindestens einen Schnittstelleninstruments (2) und der mindestens einen Recheneinheit (25) mit den entfernt angeordneten Organen (5, 6, 7) über die trennbaren Verbindungsstecker (14) herstellt.

2. Drehflügelflugzeuger nach Anspruch 1,
**dadurch gekennzeichnet, dass** die trennbaren Verbindungsstecker (14) Avionikstecker (22, 23, 24) zur Verbindung zwischen dem mindestens einen vorderen Avionikmodul (3, 3') und den entfernt angeordneten Organen (5, 6, 7) aufweisen, wobei die Avionikstecker (22, 23, 24) aufgeteilt sind in mindestens einen Hauptstecker (22) und mindestens einen sekundären Stecker (23), die in einem primären Kommunikationsmodul (30) enthalten sind, mit dem das vordere Avionikmodul (3, 3') ausgerüstet ist, wobei der Hauptstecker (22) ein Schnittstellenstecker zwischen der Recheneinheit (25) und dem mindestens einen Rechner (5) ist, wobei der sekundäre Stecker (23) ein Schnittstellenstecker zwischen Hauptkommunikationsmodul (30) und mindestens einem sekundären Kommunikationsmodul (36) ist, welches einen sekundären Datenkonzentrator (37) umfasst, wobei die Daten ausgehend von einem beliebigen des mindestens einen Bordinstruments (7) und/oder einer der Hilfsausrüstungen (6) gesammelt werden.

3. Drehflügelflugzeug nach Anspruch 2,
**dadurch gekennzeichnet, dass** der sekundäre Stecker (23) mit der Recheneinheit (25) über eine Gateway-Komponente (33) des Hauptkommunikationsmoduls (30) in Verbindung steht.

4. Drehflügelflugzeug nach einem der Ansprüche 2 und 3,
**dadurch gekennzeichnet, dass** das Hauptmodul (30) mindestens einen digitalen Hauptkommunikationsbus (31) aufweist, unabhängig davon, ob er vom Typ unidirektionaler Bus oder bidirektionaler Bus ist oder vom Multiplextyp zwischen der Recheneinheit (25) und dem Rechner (5) ist, und mindestens einen sekundären Feldbus (32) vom Multiplextyp zwischen der Recheneinheit (25) und dem Sekundärmodul (36) aufweist.

5. Drehflügelflugzeug nach einem der Ansprüche 2 bis 4,
**dadurch gekennzeichnet, dass** der Sekundärkonzentrator (37) von Daten (26, 38) die Funktionen des Empfangens, der Akquisititon, der Konvertierung von Formaten von digitalen/analogen Daten und von analogen/digitalen Daten und das Verzweigen von Informationen (26, 38), die von dem Sekundärkonzentrator (37) gesammelt werden, umfasst.

6. Drehflügelflugzeug nach einem der Ansprüche 3 bis 5,
**dadurch gekennzeichnet, dass** die Gateway-Komponente (33) außerdem in Verbindung mit einem Hauptkonzentrator (34) von Daten in Verbindung steht, die von dem mindestens einen Mensch-Maschine-Schnittstelleninstrument (35) gesammelt werden.

7. Drehflügelflugzeug nach einem der Ansprüche 1 bis 6,
**dadurch gekennzeichnet, dass** die einheitliche Verkabelungseinheit (12) mindestens Kommunikationsbündel umfasst, die elektrische Bündel oder optische Bündel sein können.

8. Drehflügelflugzeug nach einem der Ansprüche 1 bis 7,
**dadurch gekennzeichnet, dass** mindestens eine Wabe der Waben des Wabenkörpers (8) ein Fach (18) bildet, das mindestens eine Hilfseinrichtung (19) des Drehflügelflugzeugs aufnimmt, wobei die einheitliche Verkabelungseinheit (12) mindestens ein Bündel aufweist, das der Hilfsausrüstung (19) zugeordnet ist.

9. Drehflügelflugzeug nach Anspruch 7,
**dadurch gekennzeichnet, dass** die in dem Fach (18) untergebrachte Hilfsausrüstung (19) eine Lüftungseinrichtung, eine Heizung und/oder eine Klimaanlage ist.

10. Drehflügelflugzeug nach einem der Ansprüche 1 bis 9,
**dadurch gekennzeichnet, dass** der Wabenkörper (8) in seiner Querrichtung eine Zugangspassage zu dem mindestens einen vorderen Avionikmodul (3, 3') und zu einer einheitlichen Verkabelungseinheit (12), ausgehend von dem mindestens einen Fach (9), welches in der Stirnseite des Wabenkörpers (8) ausgebildet ist, aufweist.

11. Drehflügelflugzeug nach einem der Ansprüche 1 bis 10,
**dadurch gekennzeichnet, dass** die Waben des Wabenkörpers (8) mindestens aufweisen:
- ) in einem vorderen Bereich des Wabenkörpers (8), der ein Element der Stirnseite eines Armaturenbretts bildet, mindestens ein erstes Fach (9) des Stirnseitenelements, welches mindestens ein Schnittstelleninstrument (2) aufnimmt,
- ) in einem hinteren Bereich des Wabenkörpers (8), welcher einen Technikraum bildet, mindestens ein zweites Fach (10), welches mindestens ein vorderes Avionikmodul (3, 3') aufnimmt,
- ) in einem mittleren Bereich des Wabenkörpers (8) zwischen dem vorderen Bereich und dem hinteren Bereich mindestens einen Durchgang (11) für die einheitliche Verkabelungseinheit (12), wenn nicht auch mindestens einen Zugang, ausgehend von dem Stirnseitenelement, zu der einheitlichen Verkabelungseinheit (12) und zu dem Betriebsraum,
- ) mindestens ein Fach (13), welches die trennbaren Verbindungsstecker (14) aufweist.

12. Drehflügelflugzeug nach einem der Ansprüche 1 bis 11,
**dadurch gekennzeichnet, dass** der Wabenkörper (8) mit Mitteln (20) zur Montage mindestens eines Trägers (21) versehen ist, den das Montagegestell (1) aufweist, wobei der Träger (21) abnehmbar und austauschbar zwischen einer Mehrzahl von Trägern (21) in selektiver Anzahl und selektiven Anordnungen ist, wobei der Träger (21) mindestens ein Fach umfasst, welches mindestens ein Schnittstelleninstrument (2) aufnimmt.

13. Drehflügelflugzeug nach einem der Ansprüche 1 bis 12,
**dadurch gekennzeichnet, dass** die einheitliche Verkabelungseinheit (12) mindestens ein Leitungsbündel zur Verbindung mindestens eines Bordinstruments (7) mit dem mindestens einen vorderen Avionikmodul (3, 3') aufweist.

14. Drehflügelflugzeug nach einem der Ansprüche 1 bis 13,
**dadurch gekennzeichnet, dass** die einheitliche Verkabelungseinheit (12) Nebenleitungsbündel aufweist, die mit Nebensteckern (14') zur Verbindung mit den trennbaren Verbindungssteckern (14) jeweils mindestens eines Schnittstelleninstruments (2) und mindestens eines vorderen Avionikmoduls (3, 3') versehen sind.

15. Verfahren zur Implementierung eines Montagegestells, welches ein Drehflügelflugzeug nach einem der Ansprüche 1 bis 14 aufweist, **dadurch gekennzeichnet, dass** das Verfahren folgende Schritte aufweist:
- ) Werkstattfertigung des Wabenkörpers (8),
- ) Werkstattfertigung der einheitlichen Verkabelungseinheit (12), die mindestens mit trennbaren Verbindungssteckern (14), wenn nicht auch mit Nebensteckern (14') ausgerüstet ist, anschließendes Testen des Funktionierens der einheitlichen Verkabelungseinheit (12) und, bei Bedarf, Ausführen von Reparaturen,
- ) Montieren der einheitlichen Verkabelungseinheit (12) und der trennbaren Verbindungsstecker (14) auf dem Wabenkörper (8) in der Werkstatt,
- ) Montieren des mindestens einen Schnittstelleninstruments (2) auf dem Wabenkörper (8) und des mindestens einen vorderen Avionikmoduls (3, 3'), welches die Recheneinheit (25) beherbergt, in der Werkstatt,
- ) Testen des Funktionierens des erhaltenen Montagegestells (1) in der Werkstatt und ggf. Ausführen von Reparaturen,
- ) Einsetzen des erhaltenen und getesteten Montagegestells (1) in die Rumpfstruktur (4), die auf einem Montageband des Drehflügelflugzeugs präsentiert wird.

## Claims

1. A rotorcraft equipped with means for mounting, on board a fuselage structure (4), on one hand at least one forward avionics rack (3, 3') incorporating at least one computing unit (25) and at least one communications bus (31, 32), and on the other hand a cockpit comprising at least one human-machine interface instrument (2), said mounting means comprising:
- ) means for mechanical assembly of the interface instrument (2) and of the forward avionics rack (3, 3') on said fuselage structure (4), and
- ) at least one wiring system fitted to said at least one interface instrument (2) and said at least one forward avionics rack (3, 3') in order to supply them with electric power and to place them in communication with remote elements (5, 6, 7) distributed over the rotorcraft, said remote elements (5, 6, 7) comprising at least one computer (5), at least one ancillary system (6) of the rotorcraft, and at least one onboard instrument (7) from the group of instruments (7) comprising any one at least of at least one actuating element (28), at least one information sensor (27) and/or at least one computing and/or measurement means (29),
**characterised in that** the mechanical assembly means comprise a mounting structure (1) for jointly mounting said at least one interface instrument (2) and said at least one forward avionics rack (3, 3') on the fuselage structure (4), said mounting structure (1) incorporating a cellular body (8) provided with means for fixing to the fuselage structure (4), the cells of the cellular body (8) forming compartments (9, 10, 18) accommodating in the front face of the cellular body (8) at least one interface instrument (2) and in the rear zone of the cellular body (8) at least one forward avionics rack (3, 3'), at least one compartment forming at least one passageway (11) for a unitary wiring assembly (12) which can be incorporated as a block on the mounting structure (1) and is equipped with cut-off connectors (14) mounted on the cellular body (8), the unitary wiring assembly (12) providing a connection of said at least one interface instrument (2) and said at least one computing unit (25) to said remote elements (5, 6, 7) by means of the cut-off connectors (14).

2. A rotorcraft according to Claim 1,
**characterised in that** said cut-off connectors (14) comprise avionics connectors (22, 23, 24) for communicating between said at least one forward avionics rack (3, 3') and said remote elements (5, 6, 7), said avionics connectors (22, 23, 24) being segregated to form at least one main set of connectors (22) and at least one secondary set of connectors (23) which a primary communication module (30) fitted in the forward avionics rack (3, 3') comprises, the main set of connectors (22) being an interface set of connectors between the computing unit (25) and at least one said computer (5), the secondary set of connectors (23) being an interface set of connectors between the primary communication module (30) and at least one secondary communication module (36) incorporating a secondary concentrator (37) for data (26, 38) collected from any one at least of one said onboard instrument (7) and/or one said ancillary system (6).

3. A rotorcraft according to Claim 2,
**characterised in that** the secondary set of connectors (23) is connected to the computing unit (25) by means of a gateway component (33) of the primary communication module (30).

4. A rotorcraft according to any one of Claims 2 and 3,
**characterised in that** the primary module (30) comprises at least one primary digital communications bus (31) equally well of unidirectional type, of bidirectional type or of multiplexed type between the computing unit (25) and the computer (5), and at least one secondary field bus (32) of multiplexed type between the computing unit (25) and the secondary module (36).

5. A rotorcraft according to any one of Claims 2 to 4,
**characterised in that** said secondary concentrator (37) for data (26, 38) includes the functions of receiving, acquiring, converting digital/analogue and analogue/digital data formats, and of routing the information (26, 38) collected by the secondary concentrator (37).

6. A rotorcraft according to any one of Claims 3 to 5,
**characterised in that** the gateway component (33) furthermore communicates with a primary concentrator (34) for data collected from at least one human-machine interface instrument (35).

7. A rotorcraft according to any one of Claims 1 to 6,
**characterised in that** the unitary wiring assembly (12) incorporates at least communications harnesses formed equally well by electrical harnesses or by optical harnesses.

8. A rotorcraft according to any one of Claims 1 to 7,
**characterised in that** one at least of the cells of the cellular body (8) forms a compartment (18) accommodating at least one ancillary system (19) of the rotorcraft, the unitary wiring assembly (12) incorporating at least one harness assigned to said ancillary system (19).

9. A rotorcraft according to Claim 7,
**characterised in that** said ancillary system (19) accommodated in one said compartment (18) is a ventilation, heating and/or air-conditioning installation.

10. A rotorcraft according to any one of Claims 1 to 9,
**characterised in that** the cellular body (8) forms, passing through it, an access passage to said at least one forward avionics rack (3, 3') and to the unitary wiring assembly (12), from said at least one compartment (9) formed in the front face of the cellular body (8).

11. A rotorcraft according to any one of Claims 1 to 10,
**characterised in that** said cells of the cellular body (8) form at least:
- ) in a front zone of the cellular body (8) forming a front face element of an instrument panel, at least one first compartment (9) of the front face element accommodating at least one interface instrument (2),
- ) in a rear zone of the cellular body (8) forming a technical equipment space, at least one second compartment (10) accommodating at least one forward avionics rack (3, 3'),
- ) in a median zone of the cellular body (8) between the front zone and the rear zone, at least one passageway (11) for the unitary wiring assembly (12) if not also at least one accessway from the front face element to the unitary wiring assembly (12) and to the technical equipment space,
- ) at least one receptacle (13) which receives said cut-off connectors (14).

12. A rotorcraft according to any one of Claims 1 to 11,
**characterised in that** the cellular body (8) is provided with mounting means (20) for mounting at least one support (21) which the mounting structure (1) comprises, said support (21) being removable and interchangeable between a plurality of supports (21) in terms of number and selective arrangements, said support (21) incorporating at least one compartment accommodating at least one interface instrument (2).

13. A rotorcraft according to any one of Claims 1 to 12,
**characterised in that** the unitary wiring assembly (12) incorporates at least one harness connecting at least one onboard instrument (7) to said at least one forward avionics rack (3, 3').

14. A rotorcraft according to any one of Claims 1 to 13,
**characterised in that** the unitary wiring assembly (12) incorporates auxiliary harnesses provided with auxiliary connectors (14') for connecting to the cut-off connectors (14), of one said at least one interface instrument (2) and of one said at least one forward avionics rack (3, 3') respectively.

15. A method for implementing a mounting structure which a rotorcraft according to any one of Claims 1 to 14 comprises,
**characterised in that** the method comprises the following operations:
- ) manufacturing the cellular body (8) in a workshop,
- ) manufacturing the unitary wiring assembly (12) which is equipped at least with the cut-off connectors (14) if not also the auxiliary connectors (14') in a workshop, then testing the operation of the unitary wiring assembly (12) and if necessary making repairs,
- ) mounting the unitary wiring assembly (12) and the cut-off connectors (14) on the cellular body (8) in a workshop,
- ) mounting on the cellular body (8) said at least one interface instrument (2) and said at least one forward avionics rack (3, 3') accommodating the computing unit (25) in a workshop,
- ) testing the operation of the mounting structure (1) obtained, in a workshop, and if necessary making repairs,
- ) implanting the mounting structure (1) which has been obtained and tested on the fuselage structure (4) presented on an assembly line for the rotorcraft.
